# EUROPEAN PATENT APPLICATION

(11) **EP 2 695 692 A2**
(43) Date of publication of application: **12.02.2014**
(21) Application number: 13179098.2
(22) Date of filing: 02.08.2013
(51) Int. Cl.: B23H 1/08, B23H 9/10, B23H 9/14, B23H 1/04

(54) **Electric discharge machining process and article for electric discharge machining**

(30) Priority: 08.08.2012 US 201213569283
(71) Applicant: General Electric Company, Schenectady, New York 12345 (US)
(72) Inventor: Feng, Ganjiang, Greenville, SC South Carolina 29615 (US); Schaeffer, Jon Conrad, Greenville, SC South Carolina 29615 (US); Arnett, Michael Douglas, Greenville, SC South Carolina 29615 (US); Liu, Shan, Greenville, SC South Carolina 29615 (US)
(74) Representative: Cleary, Fidelma

(57) **Abstract**

An electric discharge machining process (100), an article (101) for electric discharge machining, and an electrically-conductive electric discharge machining coolant (117) are disclosed. The electric discharge machining process (100) includes electric discharge machining a target region (113) of a component (101). The article (101) includes a non-electrically-conductive layer (109), an electrically-conductive layer (107), and a target region (113) on the non-electrically-conductive layer (109). The electrically-conductive electric discharge machining coolant (117) includes a hydrocarbon liquid and carbon powder suspended within the hydrocarbon liquid.

## Description

### FIELD OF THE INVENTION

The present invention is directed to machined articles and processes of machining articles. More particularly, the present invention is directed to electric discharge machining processes, articles for electric discharge machining, and electric discharge coolants.

### BACKGROUND OF THE INVENTION

Gas turbine components are subjected to thermally, mechanically, and chemically hostile environments. For example, in the compressor portion of a gas turbine, atmospheric air is compressed, for example, to 10-25 times atmospheric pressure, and adiabatically heated, for example, to 800° - 1250° F (427° C - 677° C), in the process. This heated and compressed air is directed into a combustor, where it is mixed with fuel. The fuel is ignited, and the combustion process heats the gases to very high temperatures, for example, in excess of 3000° F (1650° C). These hot gases pass through the turbine, where airfoils fixed to rotating turbine disks extract energy to drive the fan and compressor of the turbine, and the exhaust system, where the gases provide sufficient energy to rotate a generator rotor to produce electricity. To retain sufficient strength and avoid oxidation/corrosion damage at high temperatures, coatings have been applied to the surface of metallic components so that the components function well and meet the designed life.

To improve the efficiency of operation of gas turbines, combustion temperatures have been consistently raised. With the higher temperatures, the materials used to make the component become too weak to accomplish their functions or even start to melt. Traditionally, air is used for temperature control. This requires cooling holes to be drilled through the critical locations in a coated component. A typical high temperature gas turbine blade or vane may contain hundreds of small cooling holes on the airfoil surfaces to cool metal components, for example, there can be over 700 cooling holes in a stage-1 nozzle of a typical advanced gas turbine, which is usually coated with a thermal barrier coating (TBC). Two TBC processes dominate the industry: electron beam physical vapor deposition (EBPVD) and plasma spray.

Manufacturing cooling holes in a coated component can be broadly divided into two methods: (1) drilling cooling holes first, then applying the thermal barrier coating or (2) coating the component first and then drilling cooling holes through the coating and the metallic component beneath. EBPVD is generally processed with the first method while the second method is particularly advantageous for plasma sprayed TBC that may easily cover and bridge the previously-drilled cooling holes. The first method requires a complicated masking scheme to be used prior to or during coating and requires complete removal of the masks after coating. A failure of the masking may cause blockage of pre-machined cooling holes with residual coating material, which may require costly rework of individual cooling holes. For the second method, because the thermal barrier coating is usually made of ceramic oxide(s), which are non-electrically-conductive and brittle, availability of techniques that do not damage the thermal barrier coating or underlying substrate is limited.

A known process utilizes electron discharge machining on turbine components that are electrically-conductive. The process is limited to electrically-conductive materials with a dielectric coolant. To use the process, some materials that are usually non-electrically-conductive are modified in composition to be electrically-conductive. Such modifications permit the use of electron discharge machining, but sacrifice physical and functional properties, such as, spallation, wear resistance, fatigue resistance, and/or thermal-insulating capability.

In another type of known process, two-step machining has been utilized to machine features through coating into a metal substrate. The process starts with either water jet or laser ablation to break through the coating and then employs electric discharge machining (EDM) to machine an electrically-conductive metallic portion. Use of these two steps increases labor time, capital costs (for example, for a coaxial laser ablation sub-system), and costs associated with the process. In addition, such processes can have detrimental features based upon the laser ablation. Tapers along the depth of the features machined by water jet or laser ablation are often unavoidable, despite being undesirable.

Drilling fine cooling holes (for example, having diameters of about 0.030 inches) in a TBC-coated hot-gas-path (HGP) component is one of the most demanding areas in HGP part fabrication and the two-step process is being widely used. Besides the above-mentioned disadvantages, such processes can result in misalignment of two portions of a cooling hole, which may reduce the local cooling below the design limit and cause local overheating in a component.

Laser drilling can produce heavy recast, cracks, and back strike. Water jet processing can be limited in depth capability and cause back strike. Moreover, a hole drilled by either technique has included a taper along its depth.

Electric discharge machining processes, articles for electric discharge machining, and electric discharge coolants that do not suffer from one or more of the above drawbacks would be desirable in the art.

### BRIEF DESCRIPTION OF THE INVENTION

In one aspect of the invention, an electric discharge machining process includes electric discharge machining a target region of an article. The target region is positioned on a non-electrically-conductive layer of the article and is positioned between an electrically-conductive layer of the article and an electrode of an electric discharge machining system.

In another aspect of the invention, an article for electric discharge machining includes a non-electrically-conductive layer, an electrically-conductive layer, and a target region on the non-electrically-conductive layer distal from the electrically-conductive layer, the target region including an electrically-conductive paint. The non-electrically-conductive layer is a thermal barrier coating of a turbine component.

In yet another aspect, the invention resides in an electrically-conductive electric discharge machining coolant including a hydrocarbon liquid and carbon powder suspended within the hydrocarbon liquid. The electrically-conductive electric discharge machining is positioned within an electric discharge machining system.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

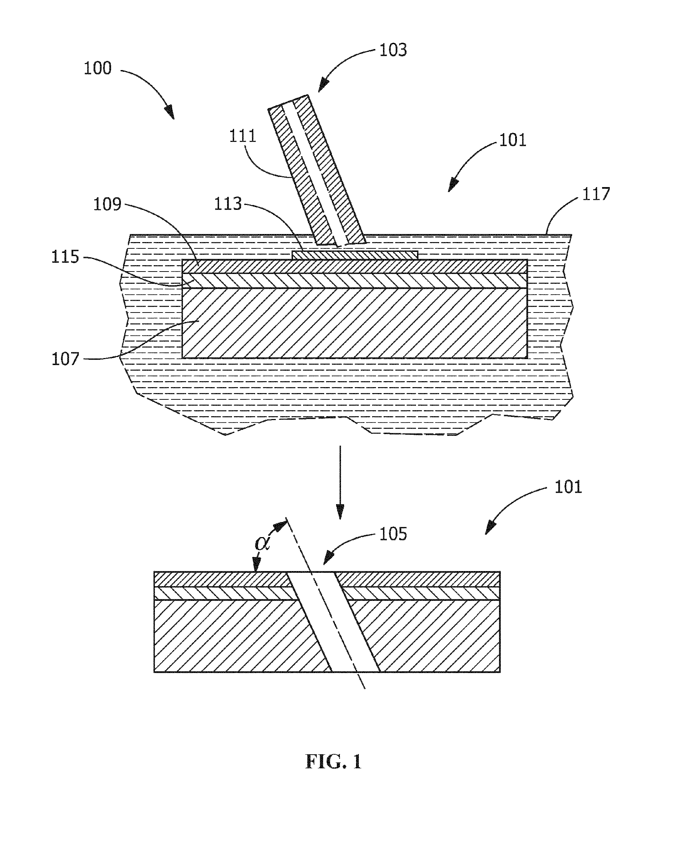

FIG. 1 schematically illustrates an exemplary process of forming an exemplary component according to the disclosure.

Wherever possible, the same reference numbers will be used throughout the drawings to represent the same parts.

### DETAILED DESCRIPTION OF THE INVENTION

Provided is an exemplary electric discharge machining process, an article for electric discharge machining, and electric discharge machining coolant. Embodiments of the present disclosure permit use of electric discharge machining on non-electrically-conductive layers, permit more control of machining of structures, permit machining at reduced cost, enhance functional properties of machined features (for example cooling holes on turbine components) and physical/mechanical properties of materials nearby, permit machining of certain machined features with increased efficiency, enhance physical properties of materials and/or machined features (for example, cooling holes on turbine components), permit drilling of small taper-free and shaped cooling holes through thermal barrier coatings with little or no damage to the coatings, or combinations thereof.

Referring to FIG. 1, an exemplary electric discharge machining (EDM) process 100 includes positioning an article 101 in relation to an EDM system 103 to form a machined feature 105, such as, a cooling hole on turbine components, for example, a blade, a nozzle, a bucket, a dovetail, a shroud, or any other suitable component. In one embodiment, the process 100 is a one-step process. For example, in one embodiment, the process 100 is devoid of hole-drilling in conjunction with masking and coating, laser drilling, water jet processing, or a combination thereof. Alternatively, in a non-preferred embodiment, the process 100 includes hole-drilling in conjunction with masking and coating, laser drilling, water jet processing, or a combination thereof.

The article 101 is positioned within an electrically-conductive EDM coolant 117. The electrically-conductive EDM coolant 117 is a fluid having at least a predetermined conductivity. In one embodiment, the fluid is a hydrocarbon liquid, such as, kerosene having carbon powder suspended within. In one embodiment, the carbon powder is present at a concentration, by weight, of between about 0.01 g/cm³ and about 0.05 g/cm³, between about 0.01 g/cm³ and about 0.03 g/cm³, between about 0.03 g/cm³ and about 0.05 g/cm³, at about 0.01 g/cm³, at about 0.03 g/cm³, at about 0.05 g/cm³, or any suitable combination, sub-combination, range, or sub-range thereof.

The article 101 includes an electrically-conductive layer 107, such as a substrate, and a non-electrically-conductive layer 109. In one embodiment, the electrically-conductive layer 107 has a conductivity of about 10² to 10⁵ ohm⁻¹cm⁻¹ and/or the non-electrically-conductive layer 109 has a resistivity of over 300 ohm cm. In one embodiment, the electrically-conductive layer 107 is a base metal, such as, a nickel-based superalloy. In one embodiment, the base metal has a composition, by weight, of about 14% chromium, about 9.5% cobalt, about 3.8% tungsten, about 1.5% molybdenum, about 4.9% titanium, about 3.0% aluminum, about 0.1% carbon, about 0.01% boron, about 2.8% tantalum, and a balance of nickel. In one embodiment, the base metal has a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, about 0.05% carbon, about 0.004% boron, about 0.01% yttrium, and a balance of nickel. In one embodiment, the base metal has a composition, by weight, of between about 0.15% and 0.20% carbon, between about 15.70% and about 16.30% chromium, between about 8.00% and about 9.00% cobalt, between about 1.50% and about 2.00% molybdenum, between about 2.40% and about 2.80% tungsten, between about 1.50% and about 2.00% tantalum, between about 0.60% and about 1.10% columbium, between about 3.20% and about 3.70% titanium, between about 3.20% and about 3.70% aluminum, between about 0.005% and about 0.015% boron, between about 0.05% and about 0.15% zirconium, about 0.50% maximum iron, about 0.20% maximum manganese, about 0.30% maximum silicon, about 0.015% maximum sulfur, and a balance nickel. In one embodiment, the non-electrically-conductive layer 109 is a coating, such as, a thermal barrier coating, for example, yttria-stabilized-zirconia, or any other ceramic oxide. In one embodiment, the article 101 includes a bond coat layer 115 positioned between the non-electrically-conductive layer 109 and the electrically-conductive layer 107. The bond coat layer 115 provides a transition between the electrically-conductive layer 107 and the non-electrically-conductive layer 109, thereby increasing physical properties associated with the transition between the electrically-conductive layer 107 and the non-electrically-conductive layer 109. A suitable bond coat layer 115 is or includes NiCrAlY, CoNiCrAlY, or FeNiCrAlY.

The non-electrically-conductive layer 109 is positioned proximal to an electrode 111 of the EDM system 103 in comparison to the electrically-conductive layer 107. Stated another way, during the process 100, article 101 is oriented such that the non-electrically-conductive layer 109 is positioned between the electrically-conductive layer 107 and the electrode 111. The non-electrically-conductive layer 109 is immersed within the electrically-conductive EDM coolant 117.

Distal from at least a portion of the electrically-conductive layer 107, a target region 113 is positioned on the non-electrically-conductive layer 109 immersed within the electrically-conductive EDM coolant 117. The target region 113 is an arc-starter capable of forming an electric arc when the electrode 111 is activated. The target region 113 and the electrode 111 are separated by the electrically-conductive EDM coolant 117. The target region 113 is positioned at a predetermined gap distance from the electrode 111. In one embodiment, the target region 113 includes an electrically-conductive paint, for example, a colloidal graphite paint. The paint adheres to the non-electrically-conductive layer 109 and has a substantially uniform thickness. In one embodiment, the target region 113 includes a paint of an electrically-conductive material to make the paint with a predetermined electric resistance, for example, between about 100 and about 300 ohm cm. The paint is applied by any suitable process, such as brushing, spraying, or injecting, for example, from a hollow electrode or a separate nozzle tip. The injection method helps to position the target region 113 accurately. In one embodiment, the injecting is accomplished by an automated syringe-type distributing mechanism that dispenses fixed amounts of electrically-conductive material before machining, depending upon the feature to be machined. In one embodiment, the target region 113 includes an electrically-conductive non-metal, such as an electrically-conductive polymer and/or oxide to make the paint have electric resistivity of less than about 300 ohm cm.

As illustrated in FIG. 1, the process 100 continues with a rapid generation of a series of recurring current discharges between the electrode 111 and the target region 113, thereby removing material of the target region 113. The process 100 continues by removing/machining at least a portion of the non-electrically-conductive layer 109 by further current discharges. In one embodiment, prior to formation of the machined feature 105, the target region 113 is completely removed by the current discharges in the process 100. In one embodiment, the process 100 further includes removing/machining the bond coat layer 115 positioned between the non-electrically-conductive layer 109 and the electrically-conductive layer 107 by further current discharges. The process 100 then continues by further current discharges removing at least a portion of the electrically-conductive layer 107, thereby forming the machined feature 105.

The machined features 105 are any suitable features capable of being formed by the EDM process 100. In one embodiment, the machined features 105 have a predetermined maximum width, for example, between about 0.015 inches and about 0.080 inches, between about 0.015 inches and about 0.030 inches, about or less than about 0.010 inches, about or less than about 0.020 inches, about or less than about or less than about 0.030 inches, about or less than about or less than about or less than about 0.040 inches, about or less than about 0.050 inches, about or less than about 0.060 inches, about or less than about 0.070 inches, about or less than about 0.080 inches, or any suitable combination, sub-combination, range, or sub-range thereof. In one embodiment, the machined feature 105 extends through the article 101 and/or includes a predetermined geometry, such as, being cylindrical, frusta-conical, conical, cuboid, rectangular/channel-like, oval-shaped, complex-shaped, or a combination thereof.

In one embodiment, depending upon the nature of the feature 105, the electrode 111 is inclined with respect to the article surface at an angle α. Suitable values for the angle α include, but are not limited to, between about 5 degrees and about 90 degrees, between about 5 degrees and about 60 degrees, between about 5 degrees and about 45 degrees, between about 5 degrees and about 30 degrees, between about 5 degrees and about 15 degrees, between about 15 degrees and about 90 degrees, between about 30 degrees and about 90 degrees, between about 45 degrees and about 90 degrees, between about 60 degrees and about 90 degrees, between about 30 degree and about 60 degrees, between about 30 degrees and about 45 degrees, between about 45 degrees and about 60 degrees, or any suitable combination, sub-combination, range, or sub-range thereof.

In one embodiment, the electrode 111 is an assemblage of individual electrodes, permitting fabrication of multiple machined features, such as, an array of cooling holes in buckets, nozzles, and/or shrouds to be fabricated in a single process as is described above.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. An electrically-conductive electric discharge machining coolant, comprising:
   a hydrocarbon liquid; and
   carbon powder suspended within the hydrocarbon liquid;
   wherein the electrically-conductive electric discharge machining is positioned within an electric discharge machining system.
2. The electrically-conductive electric discharge machining coolant of clause 1, wherein at least a portion of the electrically-conductive electric discharge machining coolant is temporarily electrically charged from an electrode of the electric discharge machining system.

## Claims

1. An electric discharge machining process (100), comprising:
electric discharge machining a target region (113) of an article (101);
wherein the target region (113) is positioned on a non-electrically-conductive layer (109) of the article (101) and is positioned between an electrically-conductive layer (107) of the article (101) and an electrode (111) of an electric discharge machining system (103).

2. The process of claim 1, wherein the target region (113) includes an electrically-conductive paint.

3. The process of claim 2, wherein the electrically-conductive paint includes a material selected from the group consisting of an electrically-conductive nonmetal, a colloid including graphite, an electrically-conductive polymer, and combinations thereof.

4. The process of claim 2 or 3, further comprising applying the electrically-conductive paint by a technique selected from the group consisting of brushing, spraying, injecting through a dispensing mechanism, and combinations thereof.

5. The process of any of claims 1 to 4, wherein the electrode (111) is an assemblage of individual electrodes configured to machine a plurality of features in a single process.

6. The process of any preceding claim, wherein the target region (113) is positioned within an electrically-conductive electric discharge machining coolant (117).

7. The process of claim 6, wherein the electrically-conductive electric discharge machining coolant (117) includes carbon powder suspended within a hydrocarbon liquid and wherein the carbon powder is at a concentration of between about 0.01 g/cm³ and about 0.05 g/cm³.

8. The process of any preceding claim, wherein the non-electrically-conductive layer (109) is a thermal barrier coating.

9. The process of any preceding claim, wherein the process (100) is a one-step process devoid of masking and coating, laser drilling, and water jet processing.

10. The process of any preceding claim, wherein the electric discharge machining removes the target region (113).

11. The process of any preceding claim, wherein the electric discharge machining removes material from one or more of the non-electrically-conductive layer (109), the electrically-conductive layer (107) or a bonding layer (115) between the non-electrically-conductive layer (109) and the electrically-conductive layer (107).

12. The process of claim 11, wherein the electric discharge machining removes the material at an angle between about 5 degrees and about 90 degrees with respect to a surface of the article.

13. The process of any preceding claim, wherein the electric discharge machining forms a cooling hole within the article (10).

14. The process of any preceding claim, wherein the article is a turbine component.

15. An article (101) for electric discharge machining, comprising:
a non-electrically-conductive layer (109);
an electrically-conductive layer (107); and
a target region (113) on the non-electrically-conductive layer (109) distal from the electrically-conductive layer (107), the target region (113) including an electrically-conductive paint;
wherein the non-electrically-conductive layer (109) is a thermal barrier coating of a turbine component.
